# EUROPEAN PATENT APPLICATION

(11) **EP 2 202 203 A1**
(43) Date of publication of application: **30.06.2010**
(21) Application number: 09180275.1
(22) Date of filing: 22.12.2009
(51) Int. Cl.: C01B 31/30, C01B 31/34, C01B 31/36

(54) **Method of preparing metal carbide and metal carbide prepared using the same**

(30) Priority: 22.12.2008 KR 20080131353
(71) Applicant: Cheil Industries Inc., Kumi-city, Kyungsangbuk-do (KR)
(72) Inventor: Kim, Sung-Jun, Uiwang-si, Gyeonggi-do (KR); Hong, Chang Min, Uiwang-si, Gyeonggi-do (KR)
(74) Representative: Bublak, Wolfgang

(57) **Abstract**

Disclosed is a method of preparing metal carbide including: applying physical force to a mixture of metal or metal oxide with carbonaceous material to provide a hybrid particle in which the carbonaceous material is filled inside the metal or metal oxide, or the carbonaceous material is coated onto the surface of the metal or metal oxide or the metal or metal oxide is filled inside the carbonaceous material, or the metal or metal oxide is coated onto the surface of the carbonaceous material and heating the hybrid particle; and a metal carbide prepared therefrom.

## Description

The present invention relates to a method of preparing metal carbide and metal carbide prepared using the same.

Metal carbide has excellent hardness, mechanical strength and rigidity, compressive strength and creep characteristics, so it may be used in various fields requiring wear resistance, cutting or heat resistance, and/or chemical resistance, and can be used as a coating material for nuclear reactors since it has a significantly low thermal expansion coefficient, high heat and electric conductive characteristics, and high thermal and chemical stability.

Metal carbide having these characteristics can be provided by a gas-solid reaction including: providing metal, metal salt, or metal oxide particles in a reactor; providing alkyne gas into the reactor to coat the particles with carbon separated from the alkyne gas through pyrolysis under the alkyne gas atmosphere; inducing a chemical change through carbothermal reduction that is conducted at high temperatures under an inert atmosphere.

The method determines the physical properties of metal carbide, which can vary depending on carbon concentration of the alkyne gas, flowing strength of the alkyne gas, surface area of the metal particles, oxygen concentration of the inert atmosphere and the like, so the overall process is delicately controlled. In addition, the obtained metal carbide is formed in a powder shape, so there are limitations with regard to synthesizing metal carbide having a specialized shape such as a needle-shape.

It is the object of the present invention to provide a method of preparing a metal carbide which is simple and can provide metal carbide with a desirable shape.

Another object of the present invention is to provide a metal carbide prepared by the method of the invention for preparing metal carbide.

Further another object of the present invention is to provide a molded product manufactured using the metal carbide of the invention.

Above object have been achieved by the provision of a method of preparing metal carbide that includes applying physical force to a mixture of metal or metal oxide with carbonaceous material to provide a hybrid particle in which the carbonaceous material is filled inside the metal or metal oxide, or the carbonaceous material is coated onto the surface of the metal or metal oxide, or in which the metal or metal oxide is filled inside the carbonaceous material, or the metal or metal oxide is coated onto the surface of the carbonaceous material; and heating the hybrid particle.

The physical force may be physical compressive force or shear force.

The metal or metal oxide may be a metal or oxide thereof such as but not limited to titanium, zirconium, tungsten, silicon, aluminum, niobium, boron, chromium, vanadium, and the like and combinations thereof.

The carbonaceous material may be coal, natural graphite, artificial graphite, expanded graphite, carbon fiber, carbon nanotube, carbon black, or a combination thereof.

When the carbonaceous material is filled inside the metal or metal oxide, or the carbonaceous material is coated onto the surface of the metal or metal oxide, the metal or metal oxide is a mother particle, and the carbonaceous material is a daughter particle; on the other hand, when the metal or metal oxide is filled inside the carbonaceous material, or the metal or metal oxide is coated onto the surface of the carbonaceous material, the carbonaceous material is a mother particle, and the metal or metal oxide is a daughter particle. The daughter particle may have a particle diameter of about 1/10 or less, for example, about 1/500 to about 1/10 of the particle diameter of mother particle.

The heat treatment may be performed under an inert atmosphere and at a temperature ranging from about 1,200°C to about 1,800°C.

According to another aspect of the present invention, a metal carbide is provided that is prepared by the method of the invention for preparing metal carbide.

According to further another aspect of the present invention, provided is a molded product manufactured using the metal carbide.

Hereinafter, further aspects of the present invention will be described in detail.

FIG. 1 is a graph showing X-ray diffraction analysis results of metal carbide obtained from Examples 1 and 2 and Comparative Example 1.

FIG. 2 is a scanning electron microscope photograph showing the metal carbide obtained from Example 1.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

Metal carbide has excellent mechanical characteristics and is widely used in fields requiring wear resistance, cutting, corrosion resistance, heat insulating material, and/or electric/thermal conductivity. According to one embodiment of the present invention, provided is a method of preparing metal carbide that can be easy and convenient and can provide metal carbide with a specialized shape.

That is, the method of preparing metal carbide according to one embodiment can enable easy synthesis of various kinds of metal carbide and mass production of the same. In addition, it is possible to prepare metal carbide with a specialized shape such as a needle-shape as well as powder shape.

The method of manufacturing a metal carbide includes applying physical force to a mixture of metal or metal oxide with carbonaceous material to provide a hybrid particle in which the carbonaceous material is filled inside the metal or metal oxide, or the carbonaceous material is coated onto the surface of the metal or metal oxide, or in which the metal or metal oxide is filled inside the carbonaceous material, or the metal or metal oxide is coated onto the surface of the carbonaceous material; and heating the hybrid particle.

Hereinafter, each step is described in more detail.

### Preparing Hybrid Particle

According to one embodiment, physical force is applied to a mixture of metal or metal oxide with carbonaceous material to provide a hybrid particle.

Exemplary metals include without limitation titanium, zirconium, tungsten, silicon, aluminum, niobium, boron, chromium, vanadium, and the like, and combinations thereof.

Examples of the metal oxide include without limitation titanium(II) oxide, titanium(III) oxide, titanium(IV) oxide, titanium(III, IV) oxide, zirconium(II) oxide, zirconium(IV) oxide, tungsten(III) oxide, tungsten(IV) oxide, tungsten(VI) oxide, silicon oxide, aluminum oxide, niobium(II) oxide, niobium(IV) oxide, niobium(V) oxide, boric oxide, chromium(III) oxide, chromium(IV) oxide, chromium(VI) oxide, chromium(II, III) oxide, vanadium(II) oxide, vanadium(III) oxide, vanadium(IV) oxide, vanadium(V) oxide, and the like, and combinations thereof.

Combinations of the metal and metal oxide may also be used.

The metal or metal oxide may have a suitable shape such as sheet-shape or needle-shape according to the desired shape for the end product. The final composite material shape is determined by the shape of the metal or metal oxide, so it is possible to freely design the final composite material shape.

Examples of the carbonaceous material may include without limitation coal, natural graphite, artificial graphite, expanded graphite, carbon fiber, carbon nanotube, carbon black, and the like, and combinations thereof.

Each of the metal oxide and carbonaceous material may have an average particle diameter of about 10 nm to about 100 µm. When the metal oxide is a daughter particle in the hybrid particle, it may have a particle diameter of about 1/500 to about 1/10 of the diameter of the mother particle of the carbonaceous material particle; on the other hand, when the metal oxide is a mother particle in the hybrid particle, it may have a particle diameter of about 10 times to about 500 times the diameter of the daughter particle of the carbonaceous material particle.

The hybrid particle is provided by applying physical force which can include for example physical collision, and/or friction. For example, the physical force may include physical compressive force or shear force.

According to one embodiment, the hybrid particle refers to a particle including carbonaceous material and metal or metal oxide, which are mixed, and in which one component is filled inside the other, or one component is coated onto the surface of the other. In other words, the hybrid particle means that the carbonaceous material is filled inside the metal or metal oxide, or the carbonaceous material is coated onto the surface of the metal or metal oxide, or that the metal or metal oxide is filled inside the carbonaceous material, or the metal or metal oxide is coated onto the surface of the carbonaceous material.

In the hybrid particle, the particle having a larger size is referred to as a mother particle, and the particle having a smaller size is referred to as a daughter particle. According to one embodiment, when the metal or metal oxide is a daughter particle, the carbonaceous material is a mother particle; and when the carbonaceous material is a daughter particle, the metal or metal oxide is a mother particle.

That is, according to one embodiment, it does not matter which particle is a mother particle or a daughter particle to synthesize the metal carbide.

No matter which particle is a mother particle, since the daughter particle is filled inside mother particle, or the daughter particle is coated onto the surface of mother particle, the mother particle has a larger size than the daughter particle. The daughter particle may have a particle diameter of about 1/10 or less than the diameter of the mother particle, or for example the daughter particle may have a particle diameter of about 1/500 to about 1/10 of the diameter of the mother particle. When the daughter particle and the mother particle have a particle diameter ratio within these ranges, the daughter particles may be uniformly distributed on the surface of the mother particle, which can improve the efficiency of producing a hybrid particle.

The method of preparing a hybrid particle may include method for preparing a particle hybrid using a flowing gas such as disclosed in U.S. Patent No. 6,892,475, which is incorporated herein by reference in its entirety, or a method for preparing a particle hybrid using a blade such as disclosed in U.S. Patent No. 4,789,105, which is also incorporated herein by reference in its entirety. The particle hybrid method using a flowing gas or blade all use a physical force, such as physical compressive force or shear force. These U.S. Patents disclose the specific process and device for carrying out the particle hybrid method. Accordingly the skilled artisan will understand how to prepare the hybrid particle of the invention in which the daughter particle is filled inside mother particle, or the daughter particle is coated onto the surface of the mother particle without undue experimentation according to these known particle hybrid methods. However, the present invention is not limited to these particle hybrid methods, but it may be performed by any known methods capable of coating or filling daughter particles onto the surface of the mother particle by physical force or any method preparing the hybrid particle.

The mixing ratio of the metal or metal oxide and the carbonaceous material may be easily calculated by the chemical change formula according to the kind of metal.

For example, titanium(IV) oxide and carbon may be chemically changed (reacted) according to the following Reaction Scheme 1.

TiO₂ + 3C → TiC + 2CO [Reaction Scheme 1]

In this case, titanium(IV) oxide and carbon are mixed in a weight ratio of about 80 : 36 to provide a hybrid particle. In exemplary embodiments, the carbon is mixed in an amount of about 5 to about 20 wt% more than the carbon amount calculated in Reaction Scheme 1 since the large amount of carbonaceous material can improve the yield of metal carbide as compared to a smaller amount during the heating treatment (i.e., carbothermal reduction reaction). However, if too much carbonaceous material is added, the hybrid particle may be poorly prepared, so that the daughter particle is rarely distributed in the mother particle.

### Heating treatment

The obtained hybrid particle is then heated.

The heating treatment of the hybrid particle is performed under an inert atmosphere, and the heating treatment refers to a carbothermal reduction. According to the heating treatment, the hybrid particle is chemically changed into metal carbide.

The heating treatment may vary depending upon the kind of metal or metal oxide. Generally, the hybrid particle may be introduced in a reactor and an inert atmosphere such as argon gas, nitrogen gas or the like can flow into the reactor.

The heating treatment may be performed at a temperature of about 1,200°C to about 1,800°C, or for example, a temperature of about 1,500°C to about 1,800°C. When the heat treatment is performed within these temperature ranges, the chemical change can be easily generated, and the production efficiency can be improved which is economical.

During the heat treatment, the heating duration is not limited as long as the temperature and atmosphere condition are satisfied.

The method of preparing metal carbide uses a hybrid particle. The hybrid particle is prepared by using all solid materials. This can provide easy control of the process conditions as compared to the conventional method using gas. Also, it is possible to provide metal carbide with a needle-shape or a sheet-shape when using a needle-shaped metal or metal oxide and a sheet-shaped metal or metal oxide, respectively, so the shape of metal carbide may be specialized.

In addition, as mentioned in above, the method of preparing metal carbide using hybrid particle enables easy synthesis of the various kinds of metal carbide, so that it may be mass produced.

According to another embodiment, provided is a metal carbide prepared by the method disclosed herein of preparing metal carbide. The metal carbide may be used in various fields, including molded products manufactured using the metal carbide used in fields requiring for wear resistance, cutting, corrosion resistance, heat resistance, electric conductor, and/or thermal conductivity.

The following examples illustrate the present invention in more detail.
However, they are exemplary embodiments and are not limiting. The contents not disclosed in this specification are easily understood by a person of ordinary skill in the art.

### [Examples]

### I. Materials

### (1) Metal oxide

The metal oxide is a nano-sized titanium(IV) oxide. The titanium(IV) oxide of titanium tetraisopropoxide is prepared in accordance with the hydrolysis method disclosed in J. Phys. Chem. 98 (1994) 1366. The obtained titanium(IV) oxide has an average particle diameter of 27 nm.

### (2) Carbonaceous material

The carbonaceous material used is carbon black having a surface area of 65m²/g measured in accordance with ASTM D3037-89 and an average particle diameter of 5.1 µm after applied with ultrasonic wave for 5 minutes in an ultrasonic radiator.

### II. Manufacturing process (Examples 1 and 2 and Comparative Example 1)

### (A) Preparing Hybrid Particle

With a mother particle of carbonaceous material and a daughter particle of metal oxide, a hybrid particle in which metal oxide is filled inside carbonaceous material, or metal oxide is coated onto the surface of carbonaceous material is prepared in accordance with the particle hybrid method disclosed in U.S. Patent No. 6,892,475. The mixing ratio of carbonaceous material and metal oxide is 1:2 in a weight ratio. The particle diameter ratio of mother particle and daughter particle is 189:1.

### (B) Heating treatment (carbothermal reduction)

The hybrid particle is introduced into a reactor and heated under an argon gas atmosphere at a temperature of 1,000°C (Comparative Example 1), 1,200°C (Example 1), 1,500°C (Example 2) during about 2 hours, respectively to provide a metal carbide.

### [Experimental Example]

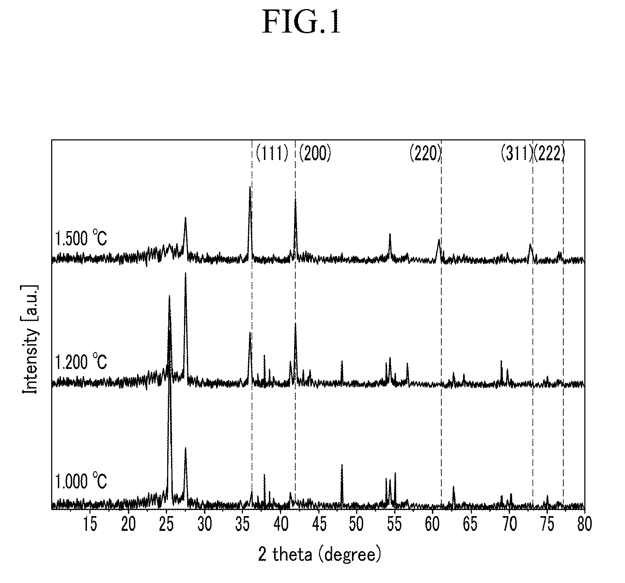

Each metal carbide obtained from Examples 1 and 2 and Comparative Example 1 is measured by X-ray diffraction (XRD) using CuKα line, and the results are shown in FIG. 1.

FIG. 1 is a graph showing X-ray diffraction analysis results of each metal carbide obtained from Examples 1 and 2 and Comparative Example 1.

Since titanium oxide has a crystal face (x y z) of 2θ=36.3° (111), 42.1° (200), 61.1° (220), 73.3° (311), 77.1° (222) in XRD, it may be confirmed that it is chemically changed to metal carbide when the peaks are shown at the sated angles in the XRD results.

Referring to FIG. 1, Comparative Example 1 which is heated at 1000°C did not show the peak of titanium carbide peak, so it is understood that titanium carbide is not provided. On the other hand, Examples 1 and 2 which are heated at 1200°C and 1500°C, respectively show the peak of titanium carbide, so it is understood that titanium carbide is provided at these temperatures. In addition, it is confirmed that the peak intensity of titanium carbide is increased by increasing the heat treatment temperature from 1200°C to 1500°C. As a result, it is confirmed that metal carbide is successfully synthesized according to Examples 1 and 2.

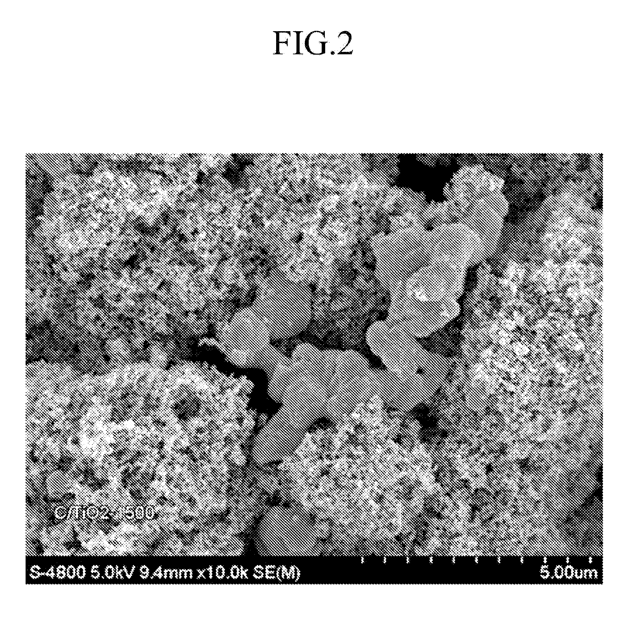

FIG. 2 is a scanning electron microscope photograph of metal carbide obtained from Example 1.

Referring to FIG. 2, metal carbide particles are confirmed. The large lump positioned in the middle of SEM photograph indicates the remaining carbon black which is not reacted since the hybrid particle is prepared with titanium(IV) oxide and carbon black in a weight ratio of 2 : 1, which means that an excessive amount of carbon black is added.

Many modifications and other embodiments of the invention will come to mind to one skilled in the art to which this invention pertains having the benefit of the teachings presented in the foregoing description. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

This application claims priority to Korean Patent Application No. 10-2008-0131353 filed on December 22, 2008, the entire disclosure of which is incorporated herein by reference.

## Claims

1. A method of preparing metal carbide comprising:
applying physical force to a mixture of metal or metal oxide with carbonaceous material to provide a hybrid particle in which the carbonaceous material is filled inside the metal or metal oxide, or the carbonaceous material is coated onto the surface of the metal or metal oxide or in which the metal or metal oxide is filled inside the carbonaceous material, or the metal or metal oxide is coated onto the surface of the carbonaceous material; and
heating the hybrid particle.

2. The method of claim 1, wherein the physical force is physical compressive force or shear force.

3. The method of claim 1 or 2, wherein the metal or metal oxide comprises titanium, zirconium, tungsten, silicon, aluminum, niobium, boron, chromium, vanadium, an oxide thereof, or a combination thereof.

4. The method of any of claims 1 to 3, wherein the carbonaceous material comprises natural graphite, artificial graphite, expanded graphite, carbon fiber, carbon nanotube, carbon black, or a combination thereof.

5. The method of any of claims 1 to 4, wherein when the carbonaceous material is filled inside the metal or metal oxide, or the carbonaceous material is coated onto the surface of the metal or metal oxide, the metal or metal oxide is a mother particle, and the carbonaceous material is a daughter particle;
and when the metal or metal oxide is filled inside the carbonaceous material, or the metal or metal oxide is coated onto the surface of the carbonaceous material, the carbonaceous material is a mother particle, and the metal or metal oxide is a daughter particle; and
the daughter particle has a particle diameter of about 1/10 or less than the particle diameter of the mother particle.

6. The method of claim 5, wherein the daughter particle has a particle diameter of about 1/500 to about 1/10 of the particle diameter of the mother particle.

7. The method of any of claims 1 to 6, wherein the heat treatment is performed under an inert atmosphere.

8. The method of any of claims 1 to 7, wherein the heat treatment is performed at a temperature of about 1,200°C to about 1,800°C.

9. A metal carbide obtainable by the method of preparing metal carbide of any of claims 1 to 8.

10. A molded product obtainable using the metal carbide of claim 9.
